(19)

Europäisches
Patentamt

European
Patent Office

Office européen
des brevets

(11)  **EP 4 745 018 A1**

(12)  **EUROPEAN PATENT APPLICATION**
published in accordance with Art. 153(4) EPC

(43) Date of publication:
**20.05.2026 Bulletin 2026/21**

(21) Application number: **24838945.4**

(22) Date of filing: **10.07.2024**

(51) International Patent Classification (IPC):
**B62K 25/26** (2006.01)    **B62K 25/10** (2006.01)
**B62K 3/02** (2006.01)    **B62K 19/30** (2006.01)

(86) International application number:
**PCT/ES2024/070436**

(87) International publication number:
**WO 2025/012504 (16.01.2025 Gazette 2025/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **12.07.2023 ES 202330584**

(71) Applicant: **Sanchez Soler, Francisco
03203 Elche (ES)**

(72) Inventor: **CLIMENT ALBERO, Andrés
03203 Elche (ES)**

(54)  **COMPACT REAR SUSPENSION FOR BICYCLES**

(57)    The present invention relates to a "four-bar" type rear suspension mechanism for high-performance mountain bikes. This mechanism consists of a main frame that supports the saddle and a pivoting swing arm that supports the rear wheel. The frame and the rear swing arm are attached to each other by an upper link and a lower link. The suspension mechanism is characterized in that it comprises a shock absorber attached at its upper end to one end of the upper link and at its lower end directly to the pivoting swing arm. The invention also provides mountain bikes incorporating such a suspension mechanism. Efficient and more compact rear suspension mechanisms are achieved with this type of suspension.

Figure 2

**Description**

**Technical Field of the Invention**

The present invention belongs to the bicycle sector, in particular to the type of bicycles popularly known as mountain bikes, that is, those intended to be used off-road, on dirt roads, forest tracks, trails and/or similar roads, and especially to those bicycles intended to participate in competitions carried out on such roads. The invention relates to a suspension for the rear wheel of such bicycles, specifically of the type known as "four-bar".

**Background of the Invention**

Specialized mountain bikes for competition or high performance require very specific designs, especially in terms of the geometry of the frame and the suspensions, since any small alteration to the design can significantly increase the performance and competitive capacity of the bike, which results in improvements in the times in the different competition modalities.

It is common for mountain bikes intended for different competition modalities to have quite different aspects, by design criteria, which makes it difficult to obtain a sufficiently homogeneous design between all mountain and off-road competition modalities that reinforces the public's perception of a model characteristic of a certain brand or manufacturer, without sacrificing the competitiveness of the bikes.

In particular, in the design of rear suspensions, of the "four-bar" type, which is the most efficient type of suspension in terms of damping capacity, it is very difficult or practically impossible to have a unique or homogeneous design in appearance that can be competitive in various competition modalities, and that leaves enough free space inside the frame to accommodate auxiliary elements, such as a bottle, pump, or even a motor, and that has a space in the vertical tube to accommodate a saddle with a conventional length seat post.

**Summary Description of the Invention**

In the following summary and detailed description, the terms "height", "upper", "lower" and "horizontal" are used. These terms must be understood with their normal meaning when the frame and the swing arm of the suspension mechanism are mounted on wheels which are resting on the ground, and the "height" is measured from the ground. The term "upper" refers to greater height and "lower" refers to lower height, in the position of the suspension mechanism, frame and swing arm mentioned (i.e. with wheels mounted and supported on the ground). The term "horizontal" refers to parallel to the ground.

A first aspect of the present invention provides a rear suspension mechanism of the "four-bar" type for cycles of two or more wheels. This mechanism includes a frame designed to support a saddle, consisting of three bars that form a first triangle. It also features a pivoting triangular swing arm, which is formed by two pairs of long bars and two short bars, creating a second triangle. This pivoting swing arm is designed to support a wheel. The main frame and pivoting swing arm are connected by an upper link and a lower link, both of which are articulated. The suspension mechanism is characterized by a shock absorber attached at one end to the first upper link and at the other end, lower relative to the first, directly to the short bars of the pivoting triangular swing arm.

With a rear suspension mechanism as described above, a suspension of great damping capacity is achieved and with great design freedom when it comes to locating the articulation points of the links and the shock absorber of the suspension mechanism, helping to adapt the mechanism to the kinematic and design needs of each competition modality, but achieving greater uniformity in the appearance of the different bicycles adapted to each modality.

Said rear suspension mechanism can become more compact than the suspension mechanisms of the state of the art, and helps to have a swing arm of reduced dimensions and low weight, so that the unsprung mass can be smaller, providing kinematic advantages.

The low position of the shock absorber helps to have more free space in the seat tube, and the possibility of inserting posts of greater length or conventional length.

In addition, this lower arrangement of the shock absorber makes the centre of gravity of the bike lower, which achieves greater manoeuvrability of the same when moving.

The compactness of the suspension mechanism makes it possible to use components of reduced dimensions and low weight, for example, linkages and shock absorbers.

The compactness of the suspension mechanism allows more space to be left in the front triangle of the frame to house components such as drums, external batteries, tool holders.

This suspension mechanism allows to improve the weight versus rigidity ratio, due to the small dimensions of the components that make up the system.

Preferably, the suspension mechanism comprises a hole for placing the axle of a rear wheel located at an apex of the pivoting swing arm formed by the two longest rods of the pivoting swing arm.

Preferably, the suspension mechanism is configured such that the hole of the rear wheel axle is located at the same height or above the hole for the chainring axle, in the position of maximum extension of the shock absorber.

Preferably, the suspension mechanism is configured so that the point of attachment of the second end of the shock absorber to the pivoting swing arm is located at a height between the lower link and the upper link

Preferably, the suspension mechanism is configured so that the shock absorber is compressed at its two ends, in use, between an extension of the upper link and the point of attachment of the second end of the shock absorber to the pivoting swing arm.

Preferably, the suspension mechanism is configured such that the imaginary line joining the instantaneous centre of rotation of the pivoting swing arm with the axle hole of the rear wheel defines an angle with respect to the horizontal direction with positive value when the shock absorber is extended.

Preferably, the suspension mechanism is configured so that the angle formed by the imaginary line that joins the instantaneous centre of rotation of the pivoting swing arm with respect to the horizontal is reduced as the pivoting swing arm moves to compress the shock absorber, and can reach negative values.

Preferably, the upper link comprises a downward oblique extension towards the front of the frame.

Preferably, the upper link is hinged to the frame at a point whose height is between the height of the ends of the short bars of the pivoting triangular swing arm.

Preferably, the minor angle of intersection between the bar that supports the saddle and the shock absorber can be between 20 and 90 degrees. Preferably said angle is between 60 and 90 degrees. More preferably, said angle is between 80 and 90 degrees.

A second aspect of the present invention provides a mountain bike comprising a rear suspension mechanism of the "four-bar" type according to the first aspect of the invention.

**Brief Description of the Drawings**

Figure 1 shows a profile view of a suspension mechanism according to an embodiment of the present invention.

Figure 2 shows a perspective view of the suspension mechanism of Figure 1, according to an embodiment of the present invention.

**Detailed Description of the Invention**

Design Criteria for a Mountain Bike Rear Suspension

The present suspension mechanism is a short double-link rear suspension design that uses a coil spring shock absorber (rear shock absorber) mounted on two co-rotating links to articulate a swing frame that supports the rear wheel. The suspension of double short links is a particular case of the "four-bar" suspension systems. The "four-bar" suspensions are so called due to the 4 members of the suspension mechanism, that is: frame, swing arm, upper link and lower link.

To facilitate the understanding of this detailed description, the terms used therein are described below.

Most "four-bar" rear suspension mechanisms use linkages to transmit and multiply the linear action of a rear shock absorber and transform it into a complex circular or arc movement for the rear wheel.

The present suspension mechanism belongs to a class of linkage rear suspension designs characterized by having a "virtual pivot" or "instantaneous centre of rotation of the pivoting swing arm", which governs the movement of the pivoting swing arm and, consequently, of the rear wheel.

The instantaneous location of this virtual pivot is the intersection of two imaginary lines extending through the pivot points of the links connecting the pivoting swing arm to the frame. As the suspension makes its way, the angles of these pivots change, and the instantaneous centre of rotation of the pivoting swing arm migrates. Because of this, a typical feature of any double short link suspension mechanism is that it is highly adjustable (largely due to the greater rotatability of the short links), which means that small changes in suspension geometry can result in large changes in suspension characteristics. This is useful because the bikes are made for different applications that require different features to be prioritized, and this adjustability makes it possible to achieve visual homogeneity between the bike models while meeting the specific riding requirements of the different models for each competition category.

Another primary consideration in suspension design is the speed at which the shock absorber is actuated through the suspension cycle. This is usually expressed as a dimensionless number, which is the quotient of the vertical displacement speed of the shaft divided by the actuation speed of the shock absorber (mm/mm). As shown in the following formula:

Leverage ratio *LRi* (*mm*/ *mm*) = Vertical wheel speed (*mm/s*) /Damping actuation speed (*mm/s*)

In isolation, the instant leverage ratio is not a useful way to analyse general suspension characteristics.

However, the instantaneous leverage ratio can be calculated at each point of the suspension cycle to give a graph of the leverage ratio and an average leverage ratio. The shape of the leverage ratio chart, along with the average leverage, its ratio and progressivity (formula shown below) will define the general characteristics of the suspension.

$$\text{Progressiveness of } Suspension\ (\%) = (LR0 - LRFinal\ /\ LR0) \times 100$$

The final consideration in suspension designs is the "anti-dive" effect. Anti-dive is the percentage of resistance to suspension compression due to the rider's inertia during acceleration; where 100% anti-dive means that the movement due to the rider's inertia during acceleration is completely resisted by the tension in the chain. The value of the anti-dive effect is geometrically defined as follows:

Where:

$$\text{Instant anti-dive } (\%) = (H1/HCG) \times 100$$

Where H1 is the instantaneous height of the point where a vertical line intersects the front wheel axis with the extension of the imaginary line that runs from the rear wheel contact point to the point where the shock absorber joins the rear swing arm and HCG is the instantaneous height of the rider's centre of gravity.

Like the leverage ratio, the anti-dive effect is usually represented graphically across the suspension travel range. Once a graph is generated, the aforementioned anti-dive figure is usually the instantaneous value at a chosen dive number, typically between 25% and 35% of suspension travel, depending on the bike.

It can be difficult to fully understand the definition and, by extension, the limitations of the calculation. The anti-dive effect is the ratio of two generally opposite forces:

The moment that causes suspension compression due to the rider's inertia during acceleration and the tension of the chain, which offers resistance to the increase in distance between the chainring axle and the rear wheel axle, which typically occurs during suspension compression.

As the suspension links begin to travel, the length between the rear wheel and the chainrings usually increases. This means that a link that can have a rear axle-plate axle length of 435 mm in the 0 position, as it progresses in its travel, can steadily increase up to 445 mm.

Although it is possible to have a suspension design where the distance between the rear axle and the chainring axle shortens throughout its travel, this would result in undesirable ride characteristics.

A common misconception is that the anti-dive effect counteracts pedal bob (vertical oscillations caused by the legs during pedalling). However, as explained above, this is not the case, since pedal bob is not considered in thee anti-dive equation. However, it is common that the rear suspension links of bicycles are designed with a value of 105-115% anti-dive (at the point of the suspension position when the weight of the rider is added), this is a little more than is required to simply counteract 100% compression due to the inertia of the rider. The actual amount may vary depending on the bicycle brand, philosophy, intended application, desired riding characteristics or specifications of the rear shock absorber.

There are many assumptions involved in the anti-dive calculation, such as tire diameter, front and rear gear teeth, ride slope, and the position of the rider's centre of gravity. These are usually chosen based on the competition modality of the bike and are kept constant. That is, the gear ratio for analysing a bike optimized for climbing is likely to differ from one optimized for descents. The most important consideration is usually the effect of the instant centre on the anti-dive.

Description of the Present Suspension Mechanism

The present suspension mechanism is a four-bar system design, using two pairs of short co-rotating links to connect the front triangle to the rear triangle frame member. The shock absorber is compressed by both the upper link and the rear triangle.

Within the broader category of four-bar suspensions, the suspension mechanism of the present invention has the following defining characteristics:

- Virtual pivot for the rear axle (the wheel is mounted on the pivoting swing arm).

- Short links in relation to the rear triangle (<1:3). The length of the sheath is three times longer than the length of the upper link.

- Co-rotating links. Both links in use rotate in the same direction when the suspension is acting. At no time will one link rotate in the opposite direction to the other.

- The instant centre of rotation never resides within a link. The instantaneous centre of rotation is at the intersection between the two imaginary lines that is projected from both links.

- The upper pivot of the rear shock absorber is mounted on the opposite side of the articulation pivot of the upper link to the rear triangle.

- The lower end of the rear shock absorber is mounted on the short bars of the swing frame.

How this Relates to the State-of-the-Art Dual Short-Link Suspension Mechanisms.

It is clear that all the factors mentioned above affect each other. For example, moving the position of the lower links will impact the leverage ratio, axle path trajectory, and anti-dive characteristics. So, despite dual short-link suspensions being highly adaptable, only a few geometric configurations produce set-ups where all factors are optimized. Among these limited useful geometric configurations, many are impractical for pragmatic reasons (e.g., the links cannot be inside the tire or too close to other components such as a motor or seat post), or aesthetic reasons (certain linkage positions simply would not result in a visually pleasing product).

There are three requirements of modern bicycle frames in the practice and limits of aesthetic design:

- Longer seat post insertion requirements
- Increased progressiveness of the leverage ratio
- Motor-assisted bicycles have greater positional limitations for suspension elements

Due to the positions of the linkages, the suspension system of the present invention has the unusual requirement that the rear shock absorber has to pass through the seat tube, which limits the insertion length of the seat post. Along with the typically higher shock absorber pivot locations due to space allocated for electric motors, this can lead to an unacceptably small insertion depth for the seat post and too high anti-dive values. Attempts to address this by adjusting the lower link, which raises the instant centre, often result in aesthetically undesirable outcomes once all other factors are balanced.

The suspension mechanism of the present invention solves these three problems with a fundamental change in suspension design. In the present invention, the lower end of the shock absorber is directly attached to the short bars of the pivoting triangular swing arm.

The most significant effect, visible on all models using this suspension mechanism, is the reduction of the vertical height of the suspension assembly.

The rear cushion now intersects the seat tube at a more oblique angle (or in some cases, near the right angle), and closer to the axle of the cranks. This increases the length of seat tube that can be used for seat post insertion.

As the lower link no longer directly drives the actuation of the shock absorber, it is possible to better adjust the anti-dive while maintaining a practical and aesthetic design, even on bikes that require a higher than normal position of the lower link.

The effect of the present suspension mechanism on the possible leverage indices is interesting and quite unique.

In the previous suspension mechanisms, the rear shock absorbing element was suspended between two pivoting and fixed links at one end to the front triangle, and with different geometries and lengths of these links; there are very few configurations that provide a progressiveness of the suspension greater than 15%.

The suspension mechanism of the present invention is markedly different. While the upper pivot of the shock absorber is still attached to a pivoting upper link and fixed to the front triangle, the lower end of the shock absorber is attached to the short bars of the rear triangular frame. This implies that the pivoting swing arm follows a path governed by the instantaneous centre of rotation and its distance is fixed from said centre. This brings an additional degree of freedom to the movement of the lower end of the shock absorber and helps create more progressive kinematic designs.

Increasing the number of pivots generally increases the degrees of freedom in the linkage design of the suspension, allowing for greater adjustability. However, increasing the number of pivots involves some negative factors: the most notable is the increase in the cost of the maintenance service and its complexity due to its greater number of elements such as links, shafts and bearings.

Other possible drawbacks are:

- Decreased in rigidity due to bearing play and/or bending of the linkage (as it can be challenging to brace all connecting elements sufficiently).
- Greater friction of suspension cycles due to more bearings and/or bushings.

- Loss of design features due to the tolerance stacking of many parts, which require lower tolerances for proper operation according to the design intent.

A four-bar suspension design where the rear wheel axle and the lower end of the shock absorber follow the movement of a migratory virtual pivot, while the upper end of the shock absorber travels in a circular motion, allowing the rear wheel axle 2 degrees of freedom and the swing arm-anchored lower end of the shock absorber 3 degrees of freedom, is extremely unusual.

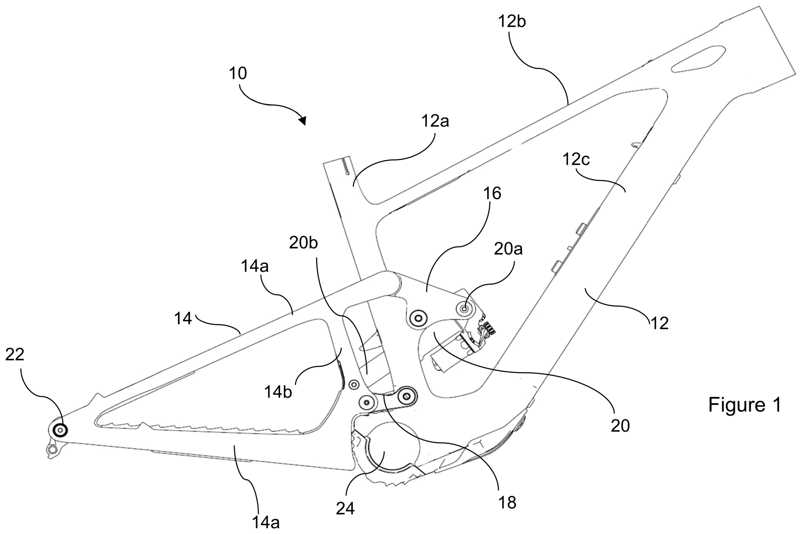

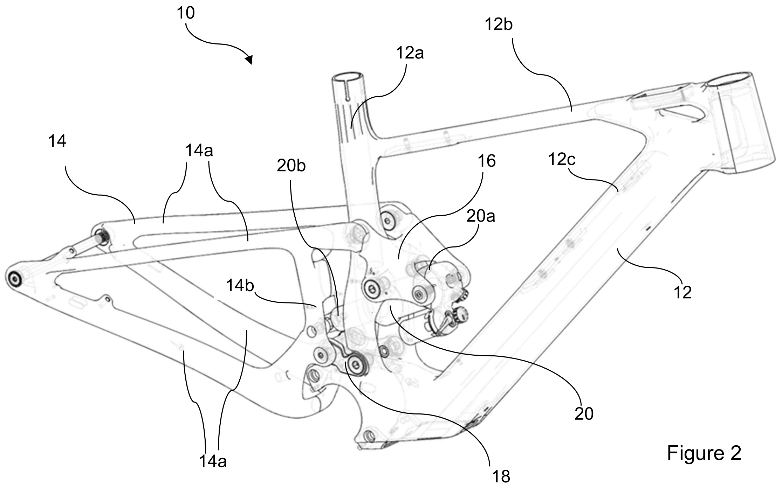

Figure 1 shows a profile view of a suspension mechanism 10 according to an embodiment of the present invention and Figure 2 shows a perspective view of the suspension mechanism 10 of Figure 1.

The suspension mechanism 10 comprises a frame 12, consisting of a front triangle and a rear pivoting swing arm 14, both triangular in shape. The rear pivoting swing arm 14 is composed of four long bars 14a and two short bars 14b, which can be optionally interconnected with bridges.

Both the front triangle and the pivoting swing arm can be made of aluminium, steel, carbon or a combination of materials. Aluminium is popular because of its lightness, durability, and reasonable price. Steel offers greater strength and shock absorption, but can be heavier. Carbon is extremely lightweight and offers excellent rigidity and vibration-absorbing ability, but it can also be more expensive.

In this particular case, both the front frame and the rear swing arm are made of a composite reinforced with carbon fibres. The screws are made of steel, and the lower joining link is made of aluminium 6061.

The suspension mechanism of the present invention also comprises links, a first upper link 16 and a second lower link 18.

These can also be made of different materials, although aluminium and carbon are the most common. As with the other components, aluminium is popular because of its lightness and durability, while carbon offers greater rigidity and can reduce weight.

Finally, the suspension mechanism of the present invention also comprises a bicycle shock absorber 20, which is a key component in mountain bikes and some recreational bicycles. Its main function is to absorb impacts and vibrations from the ground, providing greater comfort and control to the cyclist.

The bicycle shock absorber 20 consists of several important parts:

- Spring: The spring is an essential component responsible for keeping the system in the initial resting position pending the reception of impacts from the ground. It can be of different types, such as a steel spring, an air spring or a combination of both. Steel springs are common on low-end shock absorbers or downhill bikes, while air springs are lighter and can be adjusted to fit the rider's weight and ground.

- Hydraulic shock absorber: The hydraulic shock absorber is a hydraulic unit that works in conjunction with the spring to provide a controlled and smooth movement, and is responsible for absorbing the impact. It uses oil and a series of valves to dissipate the energy generated by the impacts and dampen vibrations. The shock absorber can also be adjusted in terms of compression and rebound to suit the rider's preferences and ground conditions.

- Valves and settings: Bicycle shock absorbers usually have different settings and valves to allow for customization and fine tuning. These include compression settings (to control the compression speed of the shock absorber), rebound settings (to control the extension speed) and locking (which blocks the movement of the shock absorber for climbs or smooth ground).

In general, the bicycle shock absorber plays a crucial role in improving the cyclist's comfort and performance by absorbing the impacts and vibrations of the ground. The choice and configuration of the shock absorber depends on the type of bike and riding style, and can be adjusted to suit individual preferences and ground conditions.

As can be seen in Figures 1 and 2, the rear suspension mechanism 10 of the "four-bar" type for cycles of two or more wheels, comprising a frame 12 configured to support a saddle, formed by three bars 12a, 12b, 12c, defining a first triangle and a triangular swing arm 14, pivoting with respect to the frame, formed by two pairs of long bars 14a and two short bars 14b, defining a second triangle, and configured to support a wheel, in use, both frame and swing arm being interconnected by a first upper link 16 and a second lower link 18 articulated, is characterized by comprising a shock absorber 20 attached at a first end 20a to the first upper link 16 and at a second end 20b, lower with respect to the first end 20a, directly attached to the short bars 14b of the pivoting triangular swing arm 14

## Claims

1. A rear suspension mechanism (10) of the "four-bar" type for cycles with two or more wheels, comprising a frame (12)

configured to support a saddle, formed by three bars (12a, 12b, 12c) defining a first triangle and a triangular swing arm (14), pivoting with respect to the frame, formed by two pairs of long bars (14a) and two short bars (14b), defining a second triangle, and configured to support a wheel. Both frame (12) and swing arm (14) are interconnected by a first upper link (16) and a second lower link (18) articulated. The suspension mechanism is **characterized in that** it comprises a shock absorber (20) attached at a first end (20a) to the first upper link (16) and at a second end (20b), lower with respect to the first end (20a), directly attached to the short bars (14b) of the pivoting triangular swing arm.

2. A suspension mechanism (10) according to claim 1, **characterized in that** it comprises holes (22) for placing the axis of a rear wheel respectively located at respective vertices of the pivoting swing arm formed by the two pairs of the long bars (14a) of the pivoting swing arm.

3. A suspension mechanism (10) according to claim 2, **characterized in that** it is configured so that the holes (22) for the axle of the rear wheel are located at the same height or above the hole (24) for the axle of the chainring, in a position of maximum extension of the shock absorber (20).

4. A suspension mechanism (10) according to any preceding claim, **characterised in that** it is configured so that the point of attachment of the second end (20b) of the shock absorber 920) to the pivoting swing arm (14) is located at a height between the lower link (18) and the upper link (16).

5. A suspension mechanism (10) according to any preceding claim **characterised in that** it is configured so that the shock absorber (20) is compressed at its two ends (20a, 20b), in use, between an extension of the upper link (16) and the point of attachment of the second end (20b) of the shock absorber (20) to the pivoting swing arm (14).

6. A suspension mechanism (10) according to any of claims 2 to 5, **characterized in that** it is configured so that the imaginary line that joins the instantaneous centre of rotation of the pivoting swing arm (14) with the hole (22) of the rear wheel axle defines an angle with respect to the horizontal direction with a positive value when the shock absorber (20) is extended.

7. A suspension mechanism (10) according to claim 6, **characterized in that** the angle formed by the imaginary line that joins the instantaneous centre of rotation of the pivoting swing arm (14) with respect to the horizontal is reduced as the pivoting swing arm (14) moves to compress the shock absorber (20), said angle being able to reach negative values.

8. A suspension mechanism (10) according to any preceding claim **characterised in that** the upper link (16) comprises a downward oblique extension towards the front of the frame (12).

9. A suspension mechanism (10) according to any preceding claim **characterised in that** the upper link (16) is hinged to the frame (12) at a point whose height is between the height of the ends of the short bars (14b) of the pivoting triangular swing arm (14).

10. A suspension mechanism (10) according to any preceding claim **characterised in that** the minor angle of intersection between the saddle-supporting bar (12a) and the shock absorber (20) is between 20 and 90 degrees, preferably between 60 and 90 degrees and more preferably between 80 and 90 degrees.

11. A mountain bike **characterized in that it** comprises a rear suspension mechanism (10) of the "four-bar" type according to any claim 1 to 10.

Figure 1

EP 4 745 018 A1

Figure 2

# INTERNATIONAL SEARCH REPORT

| | International application No. |
|---|---|
| | PCT/ES2024/070436 |

## A. CLASSIFICATION OF SUBJECT MATTER

See extra sheet

According to International Patent Classification (IPC) or to both national classification and IPC

## B. FIELDS SEARCHED

Minimum documentation searched (classification system followed by classification symbols)
B62K

Documentation searched other than minimum documentation to the extent that such documents are included in the fields searched

Electronic data base consulted during the international search (name of data base and, where practicable, search terms used)

EPODOC, INVENES

## C. DOCUMENTS CONSIDERED TO BE RELEVANT

| Category* | Citation of document, with indication, where appropriate, of the relevant passages | Relevant to claim No. |
|---|---|---|
| A | EP 3943374 A1 (SANCHEZ SOLER FRANCISCO) 26/01/2022, page 6, line 30 - page 17, line 14; figures. | 1-11 |
| A | US 2012228850 A1 (TSENG JIMMY) 13/09/2012, paragraph [0021] - paragraph [0036]; figures. | 1-11 |
| A | US 2019300097 A1 (CHAMBERLAIN JASON LOY ET AL.) 03/10/2019, paragraph [0029] - paragraph [0052]; figures. | 1-11 |
| A | EP 1990266 A1 (GIANT MFG CO LTD) 12/11/2008, paragraph [0015] - paragraph [0032]; figures. | 1-11 |
| A | US 2020377169 A1 (LANE TIMOTHY SAUL) 03/12/2020, paragraph [0022] - paragraph [0026]; figures. | 1-11 |

☐ Further documents are listed in the continuation of Box C.  ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance. | | |
| "E" | earlier document but published on or after the international filing date | | |
| "L" | document which may throw doubts on priority claim(s) or which is cited to establish the publication date of another citation or other special reason (as specified) | "X" | document of particular relevance; the claimed invention cannot be considered novel or cannot be considered to involve an inventive step when the document is taken alone |
| "O" | document referring to an oral disclosure use, exhibition, or other means. | "Y" | document of particular relevance; the claimed invention cannot be considered to involve an inventive step when the document is combined with one or more other documents , such combination being obvious to a person skilled in the art |
| "P" | document published prior to the international filing date but later than the priority date claimed | "&" | document member of the same patent family |

| Date of the actual completion of the international search | Date of mailing of the international search report |
|---|---|
| 28/10/2024 | **(30/10/2024)** |

| Name and mailing address of the ISA/ | Authorized officer |
|---|---|
| | J. Hernández Torrego |
| OFICINA ESPAÑOLA DE PATENTES Y MARCAS Paseo de la Castellana, 75 - 28071 Madrid (España) Facsimile No.: 91 349 53 04 | Telephone No. 913498480 |

Form PCT/ISA/210 (second sheet) (July 2022)

## INTERNATIONAL SEARCH REPORT

Information on patent family members

International application No.

PCT/ES2024/070436

| Patent document cited in the search report | Publication date | Patent family member(s) | Publication date |
|---|---|---|---|
| EP3943374 A1 | 26.01.2022 | US2023271663 A1 | 31.08.2023 |
| | | ES2945483T T3 | 03.07.2023 |
| | | PT3943374T T | 26.12.2022 |
| | | CN115697829 A | 03.02.2023 |
| | | CA3181334 A1 | 27.01.2022 |
| | | AU2021312334 A1 | 24.11.2022 |
| | | WO2022018241 A1 | 27.01.2022 |
| US2019300097 A1 | 03.10.2019 | US2024190532 A1 | 13.06.2024 |
| | | US2021070391 A1 | 11.03.2021 |
| | | US11738823 B2 | 29.08.2023 |
| | | US2019300096 A1 | 03.10.2019 |
| | | US10850796 B2 | 01.12.2020 |
| | | US10850798 B2 | 01.12.2020 |
| | | DE102019002456 A1 | 02.10.2019 |
| | | DE102019002456 B4 | 13.10.2022 |
| US2012228850 A1 | 13.09.2012 | NONE | |
| EP1990266 A1 | 12.11.2008 | TW200843998 A | 16.11.2008 |
| | | TWI320380B B | 11.02.2010 |
| | | AU2008201974 A1 | 27.11.2008 |
| | | AU2008201974B B2 | 07.10.2010 |
| | | JP2008280032 A | 20.11.2008 |
| | | JP5192282B B2 | 08.05.2013 |
| | | CA2630709 A1 | 11.11.2008 |
| | | CA2630709 C | 24.04.2012 |
| | | US2008277900 A1 | 13.11.2008 |
| | | US7806422 B2 | 05.10.2010 |
| US2020377169 A1 | 03.12.2020 | US2023032001 A1 | 02.02.2023 |
| | | WO2021242564 A1 | 02.12.2021 |
| | | EP4161823 A1 | 12.04.2023 |
| | | EP4161823 A4 | 26.06.2024 |
| | | US11440613 B2 | 13.09.2022 |

Form PCT/ISA/210 (patent family annex) (July 2022)

**INTERNATIONAL SEARCH REPORT**

International application No.

PCT/ES2024/070436

CLASSIFICATION OF SUBJECT MATTER

*B62K25/26* (2006.01)
*B62K25/10* (2006.01)
*B62K3/02* (2006.01)
*B62K19/30* (2006.01)

Form PCT/ISA/210 (extra sheet) (July 2022)